# EUROPÄISCHE PATENTANMELDUNG

(11) **EP 1 241 448 A2**
(43) Veröffentlichungstag der Anmeldung: **18.09.2002**
(21) Anmeldenummer: 02002936.9
(22) Anmeldetag: 09.02.2002
(51) Int. Cl.: G01D 5/14, G01B 7/30

(54) **Messvorrichtung zur Erfassung eines Drehwinkels**

(30) Priorität: 14.03.2001 DE 10112146
(71) Anmelder: ROBERT BOSCH GMBH, 70442 Stuttgart (DE)
(72) Erfinder: Krause, Ralph, Dr., 71334 Waiblingen (DE); Klotzbuecher, Thomas, 70635 Rudersberg (DE)

(57) **Zusammenfassung**

Die vorliegende Erfindung betrifft eine Messvorrichtung (1) zur Erfassung eines Drehwinkels mit einem magnetfeldempfindlichen Element (11) zur Erzeugung eines Messsignals und einem Rotor (2), welcher einen Magnethalter (4) und einen Magneten (10) umfasst. Der Magnethalter (4) liegt federnd an einem Führungsträger (12) an. Der Führungsträger (12) führt den Magnethalter (4) mit dem Magneten (10) in einem definierten Abstand um das magnetfeldempfindliche Element (11). Weiter ist eine Ausgleichsvorrichtung vorgesehen, welche den Magnethalter (4) derart mit dem Rotor (2) verbindet, dass eine Ausgleichsbewegung des Magnethalters (4) in Radialrichtung des Rotors (2) möglich ist.

## Beschreibung

### Stand der Technik

Die vorliegende Erfindung betrifft eine Messvorrichtung zur Erfassung eines Drehwinkels mit einem magnetfeldempfindlichen Element zur Erzeugung eines Messsignals und einem Rotor, welcher einen Magnethalter und einen Magneten umfasst.

Eine gattungsgemäße Messvorrichtung ist beispielsweise aus der DE-197 53 775.8 A1 bekannt. Sie beruht auf dem Prinzip, dass die relative Winkelposition eines Magneten, welcher Teil eines Rotors ist, bezüglich eines magnetfeldempfindlichen Elements gemessen wird. Ist das magnetfeldempfindliche Element etwa als Hall-Sensor ausgelegt und breiten sich die Magnetfeldlinien des Magneten im Wesentlichen diametral zur Drehachse aus, so ändert sich das vom Hall-Sensor gemessene Magnetfeld entsprechend der senkrechten Komponente der Magnetfeldlinien bezüglich des Hall-Sensors. Das Ausgangssignal des Hall-Sensors ist somit ein Maß für die Winkelstellung des Rotors.

Problematisch bei der mechanischen Ausbildung der Messvorrichtung ist eine zuverlässige und genaue Positionierung des Rotors bzw. des Magneten bezüglich des magnetfeldempfindlichen Elementes. Beispielsweise können sich ein Lagerspiel oder ein unvorhergesehener räumlicher Versatz der Komponenten auf die Messgenauigkeit negativ auswirken. Da eine mechanische Kopplung zwischen dem Magnethalter und dem Rotor über ein Kugel-Kegelsystem bzw. ein Kugel-Pfanne-System realisiert ist, kann ein beispielsweise aufgrund von Fertigungstoleranzen oder Wärmedehnungen resultierender Versatz in Radialrichtung des Rotors nicht ausgeglichen werden. Dadurch kann es zu mechanischen Spannungen in der Messvorrichtung kommen, welche zu einer Positionsverschiebung zwischen dem Magneten und dem magnetfeldempfindlichen Element führen kann. Daraus resultiert eine Signalverfälschung, so dass der Drehwinkel nicht mehr exakt bestimmbar ist.

### Vorteile der Erfindung

Die erfindungsgemäße Messvorrichtung mit den Merkmalen des Patentanspruchs 1 hat demgegenüber den Vorteil, dass ein Versatz zwischen dem magnetfeldempfindlichen Element und dem Magneten ausgeglichen werden kann. Hierzu liegt der Magnethalter federnd an einem Führungsträger an. Weiterhin ist der Magnethalter derart mit dem Rotor verbunden, dass der Magnethalter eine Ausgleichsbewegung in Radialrichtung des Rotors ausführen kann. Durch die gefederte Anlage des Magnethalters wird der Magnet in einer definierten relativen Lage bezüglich des magnetfeldempfindlichen Elements gehalten. Hierbei verhindert die federnde Anlage des Magnethalters am Führungsträger, dass sich ein Lagerspiel oder ein unbeabsichtigter räumlicher Versatz in Tangentialrichtung des Rotors negativ auf die Messqualität auswirkt. Die mögliche Ausgleichsbewegung des Magnethalters in Radialrichtung des Rotors ermöglicht dagegen, dass sich ein radialer Versatz negativ auf die Messqualität auswirkt. Somit ist erfindungsgemäß eine sichere und unverfälschte Signalaufnahme durch das magnetfeldempfindliche Element möglich.

Vorzugsweise befindet sich der Magnethalter mit dem Rotor über einen Mitnehmer in Kontakt. Der Mitnehmer ist dabei derart ausgebildet, dass sich der Magnethalter in Radialrichtung des Rotors bewegen kann.

Besonders bevorzugt ist der Mitnehmer aus zwei in Radialrichtung des Rotors gerichteten, wandförmigen Elementen gebildet. Der Magnethalter ist dabei zwischen den beiden wandförmigen Elementen angeordnet. Dadurch wird der Magnethalter durch die wandförmigen Elemente in Radialrichtung geführt. Um ein unbeabsichtigtes Herausrutschen des Magnethalters aus der Führung durch die wandförmigen Elemente zu verhindern, können besonders bevorzugt ein oder mehrere Anschläge zur Begrenzung der Bewegung des Magnethalters in Radialrichtung vorgesehen werden.

Gemäß einer besonders bevorzugten Ausgestaltung der vorliegenden Erfindung ist am Magnethalter mindestens ein Federelement ausgebildet, über welches der Magnethalter an dem Mitnehmer des Rotors gelagert ist. Dies ermöglicht es zusätzlich noch, einen eventuell auftretenden Versatz in Tangentialrichtung auszugleichen.

Vorzugsweise ist die Haltevorrichtung aus Kunststoff hergestellt. Dadurch weist sie ein relativ geringes Gewicht bei einer hohen mechanischen Belastbarkeit auf. Weiterhin kann sie dadurch einfach und kostengünstig hergestellt werden. Durch das geringe Gewicht weist sie auch ein niedriges Rotationsträgheitsmoment sowie eine geringe Massenträgheit auf, woraus eine niedrige Belastung bei beispielsweise in einem Motor auftretenden Vibrationen auftritt. Weiterhin kann bei einer Ausbildung des Magnethalters aus Kunststoff dieser einfach auf den Führungsträger aufgeclipst werden und weist geringe Reibkräfte sowie einen geringen Verschleiß an den Berührungspunkten zum Führungsträger auf. Überdies kann der Magnet einfach beispielsweise durch Umspritzen mit Kunststoff oder durch Einclipsen des Magneten in den Magnethalter befestigt werden.

Besonders bevorzugt ist der Magnethalter unter Verwendung eines Kunststoffblends mit einem Anteil an Polytetrafluoräthylen (PTFE) hergestellt. Dadurch kann auf einen zusätzlichen Schmierstoff zwischen dem Magnethalter und dem Führungsträger verzichtet werden.

Um eine besonders einfache Herstellung der Federelemente des Magnethalters zu ermöglichen, sind diese vorzugsweise am Magnethalter oder am Mitnehmer angespritzt.

Vorzugsweise ist der Mitnehmer des Rotors im Schnitt U-förmig ausgebildet. Dadurch kann eine Bewegung des Magnethalters in Axialrichtung des Rotors begrenzt werden.

Gemäß einer anderen bevorzugten Ausgestaltung der vorliegenden Erfindung weist die Messvorrichtung zusätzlich einen Niederhalter auf, welcher eine Bewegung des Magnethalters in Axialrichtung des Rotors unterbindet oder begrenzt. Der Niederhalter kann dabei federnd gelagert sein.

Gemäß einer anderen bevorzugten Ausgestaltung der vorliegenden Erfindung ist zwischen dem Magnethalter und dem Mitnehmer des Rotors eine formschlüssige Verbindung ausgebildet, welche eine Bewegung des Magnethalters in Radialrichtung des Rotors ermöglicht, aber eine Bewegung des Magnethalters in Axialrichtung des Rotors verhindert. Die formschlüssige Verbindung kann beispielsweise durch einen in einer Nut geführten Vorsprung ausgebildet sein.

Erfindungsgemäß wird somit eine Ausgleichsvorrichtung zum Ausgleich eines Radialversatzes zwischen dem Führungsträger und dem Rotor bereitgestellt, bei der der Magnethalter die Ausgleichsbewegung ausführen kann. Falls zwischen dem Führungsträger und dem Rotor ein Radialversatz auftritt, so ist der daraus resultierende Winkelmessfehler um so größer, je größer der Radialversatz und je kleiner ein Radius R ist, auf welchem die mechanische Kopplung zwischen dem Mitnehmer und dem Magnethalter stattfindet. Daher ist der Magnethalter mit einem möglichst langen Arm auszugestalten, um damit eine mechanische Kopplung auf einem großen Radius R zu realisieren.

Es sei angemerkt, dass selbstverständlich auch der Magnet im Führungsträger angeordnet sein kann und das magnetfeldempfindliche Element an der mit dem Rotor verbundenen Haltevorrichtung angebracht sein kann und sich somit das magnetfeldempfindliche Element um den Magneten dreht. Dadurch kann der Drehwinkel in gleicher Weise bestimmt werden, wobei hier allerdings die Kontaktierung zwischen dem magnetfeldempfindlichen Element und einer Auswerteeinheit komplizierter ist, da sich das magnetfeldempfindliche Element bewegt. Daher ist die Ausbildung mit feststehendem magnetfeldempfindlichen Element und rotierendem Magneten bevorzugt.

Als magnetfeldempfindliches Element der Messvorrichtung kann beispielsweise eine Feldplatte, ein Magnetransistor, eine Spule, ein magnetoresistives Element oder ein Hall-Element verwendet werden. Hierbei ist wichtig, dass das magnetfeldempfindliche Element eine möglichst lineare Abhängigkeit seines Ausgangssignals von der magnetischen Induktion aufweist. Es ist hierbei möglich, mit einem oder aus Sicherheitsgründen auch mit zwei oder mehreren magnetfeldempfindlichen Elementen zu arbeiten.

### Zeichnung

Ein Ausführungsbeispiel der Erfindung wird in der nachfolgenden Beschreibung näher erläutert. Es zeigen:
- Figur 1: eine Schnittansicht einer erfindungsgemäßen Messvorrichtung zur Erfassung eines Drehwinkels gemäß einem Ausführungsbeispiel der vorliegenden Erfindung und
- Figur 2: eine Schnittdarstellung der erfindungsgemäßen Messvorrichtung entlang der Linie A-A von Fig. 1.

### Beschreibung des Ausführungsbeispiels

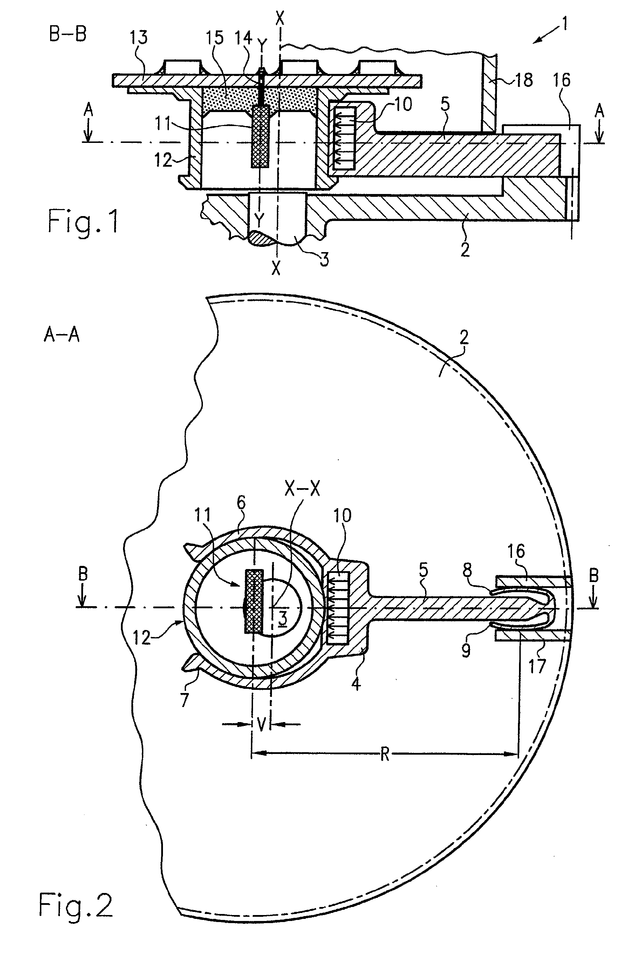

Fig. 1 zeigt eine Schnittansicht einer erfindungsgemäßen Messvorrichtung entlang einer Linie B-B von Fig. 2. An einer Leiterplatte bzw. Platine 13 ist ein magnetfeldempfindliches Element 11, z.B. ein Hall-Sensor, über einen Kontakt 14 montiert. Das magnetfeldempfindliche Element 11 ist von einem Führungsträger 12 umgeben. Der Führungsträger 12, die Platine 13 sowie das magnetfeldempfindliche Element 11 sind durch einen Verguss 15 miteinander verbunden. Der Verguss 15 dient der mechanischen Stabilisierung. Ferner schützt er den Kontakt 14 vor Kurzschluss und vor Korrosion.

Weiterhin umfasst die erfindungsgemäße Vorrichtung einen Rotor 2, welcher mit einer Welle 3, deren Drehwinkel bestimmt werden soll, verbunden ist. Ein Magnethalter 4 ist mit dem Rotor 2 verbunden. Der Magnethalter 4 umfasst einen Halterarm 5 sowie zwei Federzungen 6 und 7. Weiterhin sind am Magnethalter 4 zwei Federelemente 8 und 9 vorgesehen (vgl. Fig. 2). Die beiden Federzungen 6, 7 dienen zur federnden Befestigung des Magnethalters 4 am Führungsträger 12. Im Magnethalter 4 ist weiterhin ein Magnet 10 angeordnet, welcher im vorliegenden Ausführungsbeispiel integral in den Magnethalter 4 eingespritzt ist. Der Magnethalter 4 kann jedoch auch derart ausgebildet sein, dass der Magnet 10 eingeclipst oder eingeklebt wird.

Wie in Fig. 2 gezeigt, ist der Magnethalter 4 über die beiden Federzungen 6, 7 mit dem Führungsträger 12 verbunden. Im Führungsträger 12, welcher zylinderförmig ausgebildet ist, ist das magnetfeldempfindliche Element 11 angeordnet. Somit dient der Führungsträger 12 dazu, den Magnethalter 4 über die Federzungen 6, 7 in einer definierten Weise um das magnetfeldempfindliche Element 11 zu führen. Im vorliegenden Ausführungsbeispiel ist das magnetfeldempfindliche Element 11 als Hall-Sensor ausgebildet. Somit kann der Hall-Sensor abhängig von der relativen Stellung des Magneten 10 zum Sensor 11 ein unterschiedliches bzw. sich veränderndes Magnetfeld messen und somit die Drehung bzw. die Drehstellung des Rotors 2 aufnehmen.

Wie insbesondere in Fig. 2 dargestellt, ist der Magnethalter 4 derart mit dem Rotor 2 verbunden, dass eine Ausgleichsbewegung des Magnethalters 4 in radialer Richtung des Rotors möglich ist. Hierzu ist der Arm 5 des Magnethalters 4 zwischen einer ersten und einer zweiten Mitnehmerwand 16 und 17 angeordnet, welche den Magnethalter 4 in radialer Richtung des Rotors 2 führen. Hierbei liegen die beiden Mitnehmerwände 16, 17 parallel zum Arm 5 des Magnethalters 4. Die beiden Mitnehmerwände 16 und 17 bilden somit ein gabelartiges Element, welches den Arm 5 des Magnethalters 4 aufnimmt und bei einer radialen Bewegung führt.

Im dargestellten Ausführungsbeispiel ist aus Gründen der Montagefreundlichkeit das gabelförmige Element oben offen ausgebildet. Es ist jedoch auch denkbar, den Mitnehmer 16, 17 oben geschlossen auszubilden (U-förmig), so dass der Arm des Magnethalters 4 radial in den Mitnehmer eingeführt werden muss.

Um eine zusätzliche Spielfreiheit der Führung in tangentialer Richtung des Rotors zu gewährleisten, sind am Arm 5 des Magnethalters 4 Federelemente 8, 9 ausgebildet. Die Federelemente 8, 9 sind geometrisch und maßlich so gestaltet, dass die Kraft in radialer Richtung nicht größer als ca. 2 N wird. Es sei angemerkt, dass die Federelemente 8, 9 anstelle am Arm 5 selbstverständlich auch an den beiden Mitnehmerwänden 16, 17 ausgebildet sein können, wodurch die gleiche Wirkung erzielt wird.

Um eine Bewegung des Magnethalters 4 nach der Montage am Rotor 2 zu verhindern, ist an einem die Platine 13 aufnehmenden Deckel (nicht dargestellt) ein Niederhalter 18 vorgesehen.

Wenn nun beispielsweise aufgrund von Temperatureinflüssen ein Versatz V in radialer Richtung zwischen dem Führungsträger 12 und dem Rotor 2 auftritt (vgl. Figur 2), kann dieser Versatz V durch eine Bewegung des Magnethalters 4 in radialer Richtung des Rotors 2 ausgeglichen werden. Dabei bleibt der Magnethalter 4 unverändert mit derem Führungsträger 12 in Kontakt. Dadurch bleibt der Radius R, auf dem die mechanische Kopplung zwischen dem Magnethalter 4 und dem Rotor 2 stattfindet, konstant.

In dem in den Figuren dargestellten Ausführungsbeispiel hat sich, wie insbesondere in Fig. 1 gezeigt, ein Versatz V von der Drehachse X-X der Welle 3 nach links ergeben, so dass sich der Magnethalter 4 nun um die Achse Y-Y, in welcher das magnetfeldempfindliche Element 11 liegt, dreht. Da sich durch die erfindungsgemäße Ausgleichsvorrichtung die Relativposition zwischen dem magnetfeldempfindlichen Element 11 und dem Magneten 10 nicht geändert hat, kann auch bei einem derartigen Versatz der Drehwinkel des Rotors 2 sehr genau ermittelt werden.

Die vorliegende Erfindung kann besonders bevorzugt bei einem elektrischen Abgasrückführventil verwendet werden. Dabei ist der Rotor 2 als Abtriebszahnrad ausgebildet, welches das Klappenwellenzahnrad des Klappenventils darstellt. Die vorliegende Erfindung ist jedoch nicht auf eine derartige Anwendung beschränkt, sondern kann auch bei anderen Messvorrichtungen zur Erfassung eines Drehwinkels verwendet werden.

Somit betrifft die vorliegende Erfindung eine Messvorrichtung 1 zur Erfassung eines Drehwinkels mit einem magnetfeldempfindlichen Element 11 zur Erzeugung eines Messsignals und einem Rotor 2, welcher einen Magnethalter 4 und einen Magneten 10 umfasst. Der Magnethalter 4 liegt federnd an einem Führungsträger 12 an. Der Führungsträger 12 führt den Magnethalter 4 mit dem Magneten 10 in einem definierten Abstand um das magnetfeldempfindliche Element 11. Weiter ist eine Ausgleichsvorrichtung vorgesehen, welche den Magnethalter 4 derart mit dem Rotor 2 verbindet, dass eine Ausgleichsbewegung des Magnethalters 4 in Radialrichtung des Rotors 2 möglich ist.

Die vorhergehende Beschreibung des Ausführungsbeispiels gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Messvorrichtung zur Erfassung eines Drehwinkels mit einem magnetfeldempfindlichen Element (11) zur Erzeugung eines Messsignals und einem Rotor (2), welcher einen Magnethalter (4) und einen Magneten (10) umfasst, wobei der Drehwinkel durch eine Relativbewegung zwischen dem Magneten (10) und dem magnetfeldempfindlichen Element (11) erfassbar ist, **dadurch gekennzeichnet, dass** der Magnethalter (4) federnd an einem Führungsträger (12) anliegt und der Magnethalter (4) derart mit dem Rotor (2) verbunden ist, dass eine Ausgleichsbewegung des Magnethalters (4) in Radialrichtung des Rotors (2) möglich ist.

2. Messvorrichtung nach Anspruch 1, **dadurch gekennzeichnet, dass** sich der Magnethalter (4) mit dem Rotor (2) über einen Mitnehmer (16, 17) in Kontakt befindet.

3. Messvorrichtung nach Anspruch 2, **dadurch gekennzeichnet, dass** der Mitnehmer aus zwei wandförmigen Elementen (16, 17) gebildet ist, welche den Magnethalter (4) zwischen sich aufnehmen.

4. Messvorrichtung nach Anspruch 2 oder 3, **dadurch gekennzeichnet, dass** zwischen dem Mitnehmer (16, 17) und dem Magnethalter (4) mindestens ein Federelement (8, 9) angeordnet ist.

5. Messvorrichtung nach einem der Ansprüche 1 bis 4, **dadurch gekennzeichnet, dass** der Magnethalter (4) aus Kunststoff hergestellt ist.

6. Messvorrichtung nach Anspruch 5, **dadurch gekennzeichnet, dass** der Magnethalter (4) unter Verwendung eines Kunststoffblends mit Polytetrafluoräthylen hergestellt ist.

7. Messvorrichtung nach Anspruch 5 oder 6, **dadurch gekennzeichnet, dass** die Federelemente (8, 9) an den Magnethalter (4) oder an den Mitnehmer (16, 17) angespritzt sind.

8. Messvorrichtung nach einem der Ansprüche 2 bis 7, **dadurch gekennzeichnet, dass** der Mitnehmer im Schnitt U-förmig ausgebildet ist und eine Bewegung des Magnethalters (4) in Axialrichtung des Rotors (2) begrenzt.

9. Messvorrichtung nach einem der Ansprüche 1 bis 7, **gekennzeichnet durch** einen Niederhalter (18), welcher eine Bewegung des Magnethalters (4) in Axialrichtung des Rotors (2) begrenzt.

10. Messvorrichtung nach einem der Ansprüche 2 bis 7, **dadurch gekennzeichnet, dass** zwischen dem Magnethalter (4) und dem Mitnehmer (16, 17) eine formschlüssige Verbindung ausgebildet ist, die eine Bewegung des Magnethalters (4) in Radialrichtung des Rotors (2) ermöglicht, aber eine Bewegung des Magnethalters (4) in Axialrichtung des Rotors (2) verhindert.
